# EUROPEAN PATENT SPECIFICATION

(11) **EP 0 691 470 B1**
(45) Date of publication and mention of the grant of the patent: **29.11.2000**
(21) Application number: 95110588.1
(22) Date of filing: 06.07.1995
(51) Int. Cl.: F02M 35/10, F02M 69/04

(54) **Internal combustion engine and method for forming the combustion charge thereof**
Brennkraftmaschine und Verfahren zur Luft-Kraftstoffgemischbildung dafür
Moteur à combustion interne et méthode pour former la mélange d'air et de carburant

(30) Priority: 07.07.1994 JP 17939394
(43) Date of publication of application: 10.01.1996
(73) Proprietor: YAMAHA HATSUDOKI KABUSHIKI KAISHA, Iwata-shi Shizuoka-ken, 438 (JP)
(72) Inventor: Sakurai, Kenichi, Iwata-shi, Shizuoka-ken (JP); Kawamura, Makoto, Iwata-shi, Shizuoka-ken (JP)
(74) Representative: Grünecker, Kinkeldey, Stockmair & Schwanhäusser Anwaltssozietät

(56) References cited:
- EP-A- 0 499 268
- EP-A- 0 539 614
- EP-A- 0 579 218
- EP-A- 0 586 891
- EP-A- 0 610 932
- EP-A- 0 638 720
- EP-A- 0 651 156
- EP-A- 0 678 666
- EP-A- 0 678 667
- WO-A-94/02736
- PATENT ABSTRACTS OF JAPAN vol. 16 no. 391 (M-1298) ,19 August 1992 & JP-A-04 128534 (MAZDA) 30 April 1992,
- PATENT ABSTRACTS OF JAPAN vol. 8 no. 146 (M-307) ,7 July 1984 & JP-A-59 043922 (TOYOTA) 12 March 1984,
- PATENT ABSTRACTS OF JAPAN vol. 18 no. 512 (M-1679) ,27 September 1994 & JP-A-61 073828 (YAMAHA) 21 June 1994,

## Description

The present invention relates to an internal combustion engine according to the preamble of claim 1.

Moreover, this invention relates to a method for forming the combustion charge of an internal combustion engine according to the preamble of claim 10.

Fuel injected engines have, for example, air intake passages which open into the combustion chambers, which are equipped with air intake valves to open and close those passages. Fuel injectors additionally inject fuel into those air intake passages.

In many cases in this type of fuel injected engine, the amount of fuel injected by the fuel injectors is regulated based upon time, and an appropriate amount of fuel is supplied based upon the operating state of the engine.

However, in cases of a broad engine operating range from low RPM, low load operations to high RPM, high load operations for such fuel injected engines, merely controlling the amount of fuel injection causes instability in the fuel supply, decreases fuel economy, and makes it difficult to improve the cleansing of exhaust emissions.

For example, when the air intake passages are formed so that a plurality open into each combustion chamber, the air/fuel mixture supplied to the combustion chamber from the centrally positioned opening generates a clockwise tumble therein, and the fuel supplied from the side opening(s) generates a counter clockwise tumble. This causes problems, particularly in low RPM, low load operating ranges, when there can be a lean air/fuel mixture in the vicinity of the spark plug located in the center of the combustion chamber, thereby leading to instability and poor combustion, exhausting unburned fuel gases, and inhibition of exhaust gas cleansing.

In addition, during high RPM, high load operations, turbulence can be created in the air/fuel mixture leading to unstable combustion, emission of unburned gases and inhibition of exhaust gas cleansing.

From prior art document EP 0 539 614 A1 an internal combustion engine is known. Said internal combustion engine comprises a cylinder head which is provided with a pair of intake valve bores facing a combustion chamber, a single intake passage and a pair of intake ports between which a partition wall is interposed and which connect the intake passage and the intake valve bores to each other. Said internal combustion engine further comprises a fuel injection nozzle having a fuel injection port and air assist injections ports, wherein said air assist injection ports are located near the fuel injection port for dividing the ejected fuel jet. With said air assist injection ports the fuel jet is adapted to the special form of the intake passage having the partition wall separating the intake openings of two intake valves. Therefore, the engine according to EP 0 539 614 A1 adapts the fuel jet to the geometric features of the intake passages and prevents the spraying of fuel directly to the partition wall at a low engine load and low engine speed conditions.

From prior art document EP-A1-0 499 268 a five-valve engine with three intake valves is known. The related engine comprises an intake passage way means having a communicating area adjacent to at least a center valve seat of a centrally disposed intake valve, wherein said communicating area allows a fuel amount of the charge feed to said centrally positioned intake valve to be varied in response to the load conditions of the engine.

From prior art document JP 59 043 922 an internal combustion engine is known with two intake valves and two air intake passages related thereon. Said intake passages having a communication opening adjacent to the fuel injection nozzle. The airflow through one of said passages is controlled by a control valve in accordance with the engine load.

Furthermore, from prior art document JP 4 128 534 an internal combustion engine is known with three intake valves and means for controlling the fuel injection quantity to a center port in accordance with the engine load. Said means consists of two fuel injection nozzles being controlled by a control unit. One of said nozzles is located adjacent to the center intake valve for supplying said valve only. The other fuel injection nozzle is located upstream with regard to the first injection nozzle.

With regard to prior art document JP 6 173 828 an internal combustion engine with three intake valves is known. Said engine having an intake air port formed on a cylinder head and a fuel injection nozzle arranged in the upper stream side center of the intake air port. Said fuel injection nozzle is located in distance to a center plan of the related combustion chamber to improve the combustion conditions.

Accordingly, it is an objective of the present invention to provide an improved combustion engine and an improved method as indicated above for forming the combustion charge thereof, which ensures stable combustion, thereby permitting lower fuel consumption and improved exhaust gas cleansing for both low engine speed and low load and high engine speed and high load engine operating conditions.

According to the present invention, this objective as regards the apparatus aspects thereof is performed by an internal combustion engine of the above-mentioned type having the characterizing features of claim 1.

According to the preferred embodiment, a control unit is provided for controlling said means for varying the direction of fuel injection in response to engine operating conditions.

Depending on the operating state of the engine, fuel is injected towards different areas to insure an effective supply of an air fuel mixture to the vicinity of the spark plug in order to facilitate ignition. That can be realised by means of varying the direction of fuel injection, so that the fuel is injected towards different areas. It is also possible that the cross-section of the fuel jet is varied so that the direction of fuel injection (the fuel spray particles being considered as an entirety) is kept constant and yet varying areas are sprayed with fuel. The area of fuel injection can also be varied when fuel is injected from different points.

According to a preferred embodiment, the engine is a five-valve engine including three intake valves associated with said three branch intake passages communicated with the combustion chamber via the central opening and the pair of side openings.

In the low engine speed and low load range, the fuel is injected towards the central opening so as to ensure a rich and effective air fuel mixture in the vicinity of the spark plug so as to facilitate ignition. This is accomplished without increasing the amount of fuel supplied and yet combustion is stabilised, fuel consumption reduced and exhaust gas cleansing is improved.

In addition, in high engine speed and high load operating ranges, the intake charge supplied through the side openings has a stronger tumble motion in one direction in comparison with the injection from the central opening which would have a tumble motion in the opposite direction, and therefore the air fuel mixture efficiency is improved throughout the entire combustion chamber, hence reducing fuel consumption and improving the exhaust gas cleansing action in the high engine speed and high load range.

In a preferred embodiment said air injection unit comprises an air passage being connected with said air injection opening and an air control valve is disposed in said air passage for controlling the flow of air thereto, said control valve being controlled by the control unit.

Accordingly, the fuel jet can be deflected easily by means of injecting air and the areas sprayed with fuel can be varied.

According to yet another preferred embodiment, said air injection unit comprises a plurality of air injection openings disposed at the sides of fuel injection nozzles so that the direction and the cross-section of the fuel jet can be varied exactly and precisely in response to engine operating conditions.

Moreover, according to the present invention, said objective as regards the method aspect thereof is performed by a method for forming a combustion charge of an internal combustion engine as mentioned above and having the characterizing features of claim 10.

Preferably, the fuel jet is subjected to an air jet which is injected under an angle towards said fuel jet to deflect the same.

Further preferred embodiments of the invention are laid down in other dependent claims.

Hereinafter, the present invention will be explained and illustrated in greater detail by means of preferred embodiments of the invention in conjunction with accompanying drawings, wherein:
Figure 1 is a structural diagram of a fuel injected engine according to a preferred embodiment of the present invention,
**Figure 2** is a sectional view showing operations in the low to mid-RPM, low load operation range.
**Figure 3** is a top view showing operations in the low to mid-RPM, low load operation range.
**Figure 4** is a sectional view along line IV-IV of Figure 2.
**Figure 5** is a view from the A direction in Figure 2 showing the positioning of the fuel injector and the air intake openings.
**Figure 6** is a view from the B direction in Figure 3 showing the positioning of the fuel injector and the air intake openings.
**Figure 7** is a sectional view showing operations in the high RPM, high load operating range.
**Figure 8** is a top view showing operations in the high RPM, high load operating range.
**Figure 9** is a sectional view of the air injection in the high RPM, high load operating range taken along line IV- IV of Figure 2.
**Figure 10** is a view from the C direction in Figure 7 showing the positioning of the fuel injector and the air intake openings.
**Figure 11** is a view from the D direction in Figure 8 showing the positioning of the fuel injector and the air intake openings.
**Figure 12** is a graph showing the relationship between the engine RPM and the throttle aperture.
**Figure 13** is a figure showing another embodiment of a fuel injection control means.

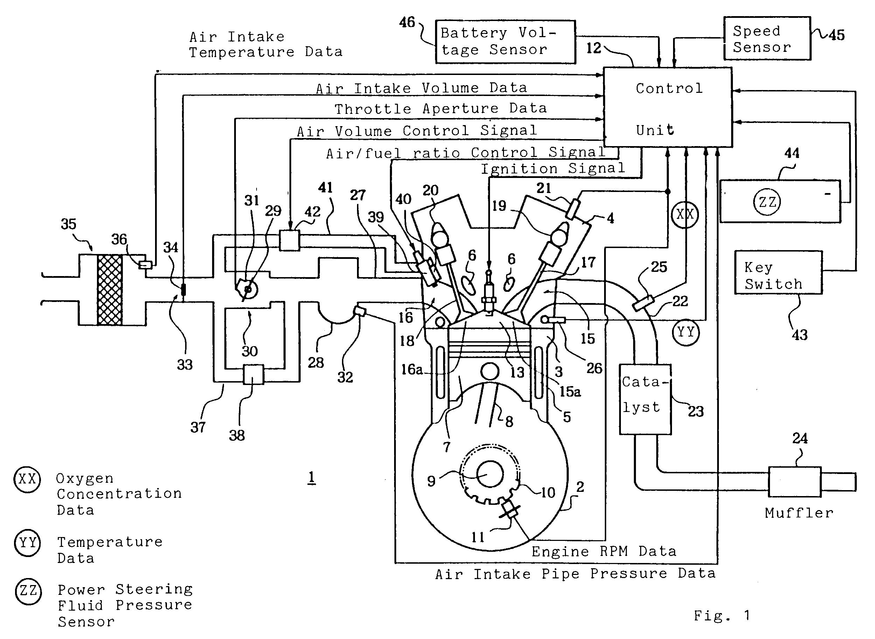

The overall structure of the fuel injected engine will first be described with reference to Figure 1. The fuel injected engine 1 is a water cooled engine. The cylinder head 4 is mounted on the cylinder block 3, which is mounted atop the crankcase 2. Water jackets 5 and 6 are present in the cylinder block 3 and the cylinder head 4 for the circulation of coolant.

Reciprocating pistons 7 are connected to the crankshaft 9 by means of rods 8, and the reciprocation of the pistons 7 causes the crankshaft 9 to turn. A crank angle sensor 11 has been mounted opposite a sprocket 10 that is mounted on the crankshaft 9, and this angle sensor 11 transmits information on engine operation to a control unit 12.

Cylinder block 3, cylinder head 4, and piston 7 form a combustion chamber 13, and a sparkplug 14 is mounted in the center of the cylinder head 4 at the edge of the combustion chamber. The spark plug 14 generates a spark at an appropriate timing based upon an ignition signal from the control device 12, and that spark ignites the compressed air/fuel mixture in the combustion chamber 13.

Formed in the cylinder head 4 are exhaust passage 15 and air intake passage 16 which open into the combustion chamber 13. Exhaust valves 17 and air intake valves 18 open and close the respective openings 15a, 16a. The exhaust valves 17 and air intake valves 18 are operated by means of cams 19 and 20 which compose the dynamic valve mechanism. A cam angle sensor 21 sends cam angle information to the control unit 12.

The exhaust passage 15 that is formed in the cylinder head 4 is connected to the exhaust pipe 22, and a catalyst 23 is located inside this exhaust pipe. The catalyst 23 cleans the exhaust gases. A muffler 24 is also connected to the exhaust pipe 22. An O₂ sensor 25 is mounted upstream of the catalyst 23, and it sends information on oxygen concentration to the control unit 12. A water temperature sensor 26 is also mounted in the cylinder head 4; it detects the coolant temperature and sends that temperature information to the control unit 12.

The air intake passage 16 that is formed in the cylinder head 4 is connected to an air intake pipe 27. A surge tank 28 is mounted to this air intake pipe 27, and a throttle body 30, equipped with a throttle valve 29, is connected upstream of this surge tank 28. The throttle valve 29 controls the amount of air intake. The aperture of the throttle valve is detected by the throttle position sensor 31, and the throttle aperture information for this throttle valve 29 is sent to the control unit 12. An air intake pipe pressure sensor 32 is mounted on the surge tank 28, and air intake pipe pressure information for the inside of the air intake pipe 27 is sent to the control unit 12.

An air flow meter 33 is located upstream of the throttle body 30, and an air intake volume sensor 34 mourned on the air flow meter 33 sends air intake volume information to the control unit 12. Connected further upstream from the air flow meter 33 is an air cleaner 35. An air intake temperature sensor 36 mounted on the air cleaner 35 provides air intake temperature information to the control unit 12. There is a bypass passage 37 connecting upstream and downstream of the throttle body 30, and this bypass passage 37 contains an idle speed control valve 38.

A fuel injector 39 is mounted in the air intake passage 16, and, based upon the air/fuel ratio control signal from the control unit 12, this fuel injector 39 injects fuel according to the operating state of the engine. Air intake injection openings 40 are located on both sides of the fuel injector 39, and air injected from these air intake openings controls the direction of the fuel injection.

The air intake openings 40 are connected to the upstream side of the throttle body by an air passage 41. The difference between the engine intake pressure and the atmospheric pressure causes air to be injected from this air passage 41. The amount of air injected from the air intake openings 40 is controlled by the air control valve 42 in the air passage 41. It would also be possible for this air injection to be performed by a supercharger not shown in the figure, which would also supply air for injection through the air intake openings 40.

Information is also fed to the control unit 12 from the key switch 43, the power steering fluid pressure sensor 44, the vehicle speed sensor 45, and the battery voltage detection sensor 46.

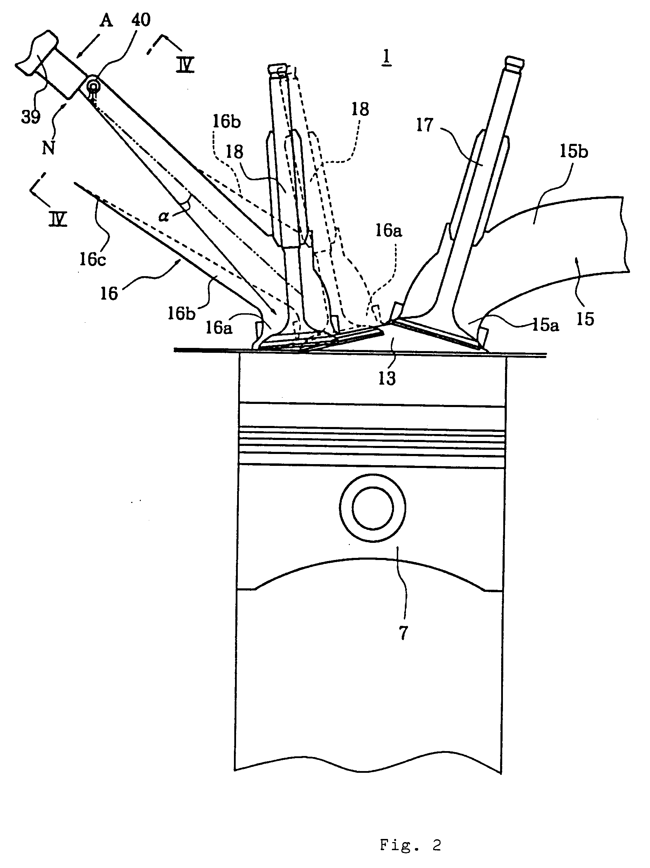

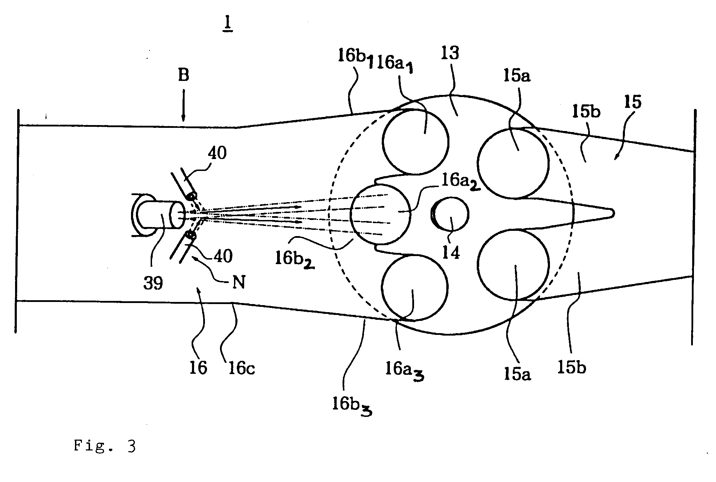

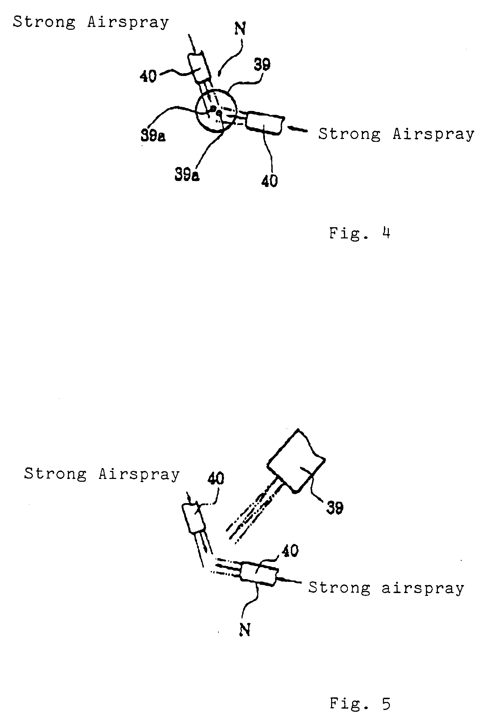

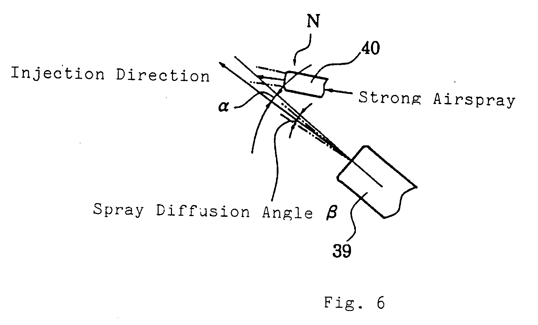

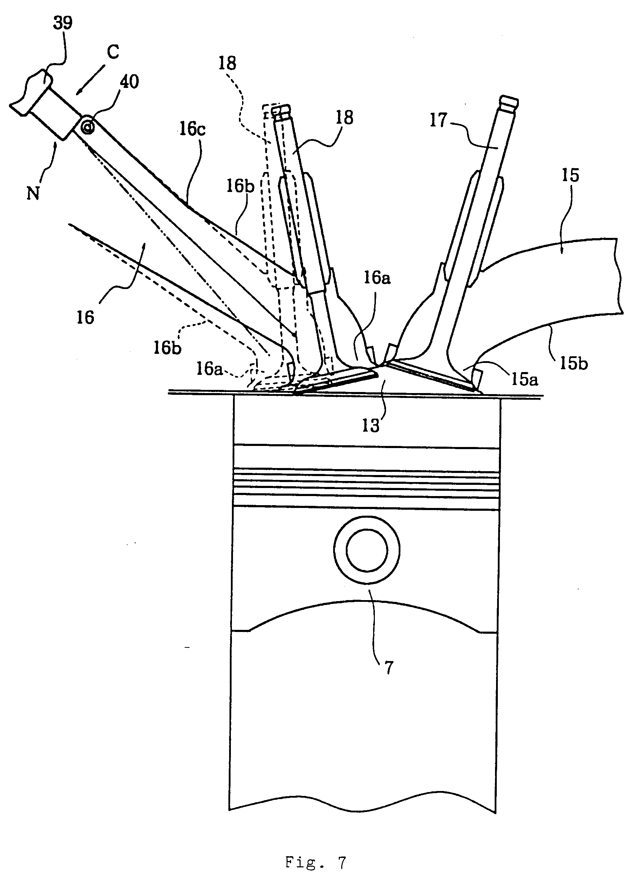

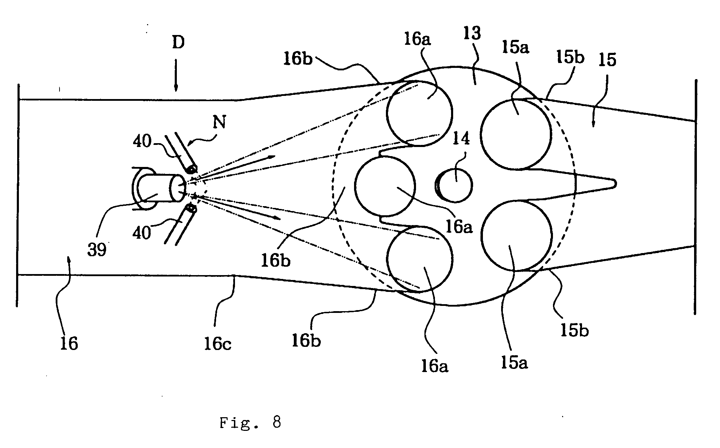

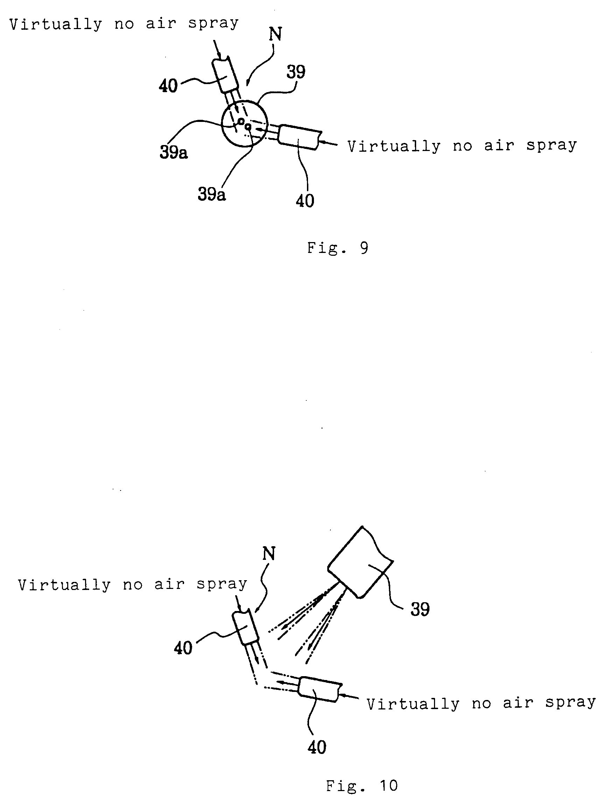

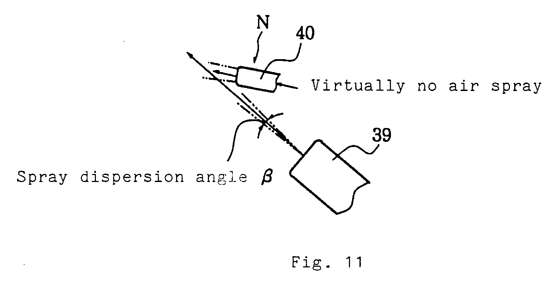

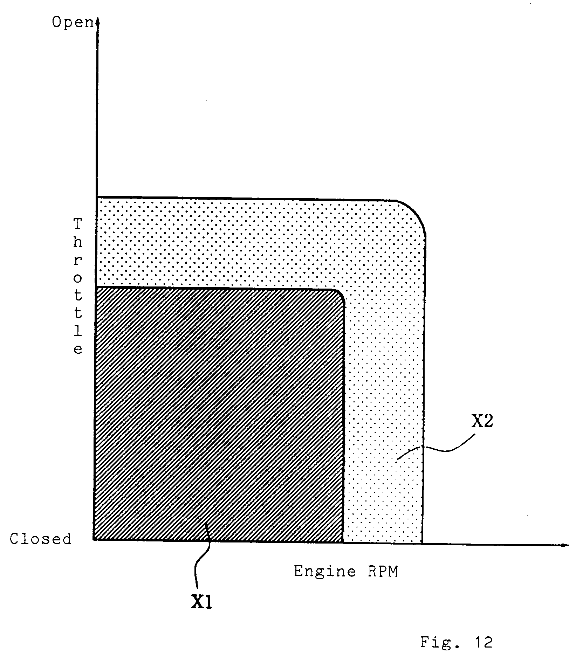

Next, the details of the fuel injected engines of this embodiment will be explained with reference to Figures 2 through 12. Figure 2 is a sectional view showing operations in the low RPM, low load range; Figure 3 is a top view showing operations in the low RPM, low load range; Figure 4 is a sectional view along line IV-IV of Figure 2 showing the fuel injection in the low RPM, low load range; Figure 5 is a view from the A direction in Figure 2 showing the positioning of the openings for the fuel injector and the air intake openings; Figure 6 is a view from the B direction in Figure 3 showing the positioning of the fuel injector and the air intake openings; Figure 7 is a sectional view showing operations in the high RPM, high load range; Figure 8 is a top view showing operations in the high RPM, high load range; Figure 9 is a sectional view along line IV-IV of Figure 2 showing air injection in the high RPM, high load operating range, Figure 10 is a view from the C direction in Figure 7 showing the positioning of the fuel injector and the air intake openings; Figure 11 is a view from the D direction in Figure 8 showing the positioning of the fuel injector and the air intake openings; and Figure 12 is a graph of the relationship between engine RPM and throttle aperture.

In this fuel injected engine, there are two exhaust valves 17 on either side of the spark plug 16, and three air intake valves 18. The exhaust valves 17 open and close the two openings 15a from the exhaust passage 15 into the combustion chamber 13, and the two openings 15a are located on the circumference of the combustion chamber 13. The exhaust passages 15b leading from the two openings 15a merge into one passage 15 downstream.

Air intake valves 18 open and close the three air intake openings 16 that open into the combustion chamber 13 from the air intake passage 16. The three openings 16a are located around the circumference of the combustion chamber 13. The air intake passage 16 is comprised of three branch passages 16b which merge into one on the downstream side, and these three branch passages 16b are connected to the openings 16a.

Upstream of the branch 16c of the air intake passage 16 is located the fuel injector 39 which is positioned to inject fuel from the top wall in the air intake passage 16 toward the openings 16a. As shown in Figure 4, a pair of injector nozzles 39a are formed in the fuel injector 39.

On either side of the fuel injector 39 are air intake openings 40 which comprise the fuel injection control means N. The air is sprayed toward the fuel that is sprayed from the injector nozzles 39a. The control unit 12 controls the fuel injector 39 based upon the operating state of the engine. Also, because the air intake openings 40 are connected by air passage 41 to the upstream side of the throttle body 30, the spraying-in of the air based upon the operating state of the engine is controlled by the difference between the engine intake air pressure from this air passage 41 and the atmospheric pressure. The amount of air that is sprayed from the air intake openings 40 is controlled by an air control valve 42 located in the air passage 41.

For example, in the low to mid RPM, low load operating range X1, as shown in Figures 2 through 6, the air spray from the air intake openings 40 causes the direction of the fuel spray from the fuel injector 39 to be directed toward the central opening 16a₂ of the air intake passage 16. On the other hand, in the high RPM, high load operating range X2, as shown in Figures 7 through 10, the fuel spray from fuel injector 39 is directed toward the side openings 16a₁ and 16a₃ of the air intake passage 16, since there is virtually no air spray from the air intake openings 40. Here, what is meant by virtually no air spray includes the case of no air spray at all or a limited amount of air spray that is insufficient to alter the direction of the fuel spray from the fuel injector 39.

In this embodiment, the air intake passage 16 has been formed with three openings 16a which open into the combustion chamber 13. In the X1 low RPM, low load operating range, air is sprayed to direct the fuel spray from the fuel injector 39 toward the central opening 16a₂ in the air intake passage 16; in the X2 high RPM, high load range, the air spray is controlled to direct the fuel spray from the fuel injector 39 toward the side openings 16a₁, 16a₃.

The fuel injection control means N is composed of air intake openings 40 which spray air and of an air control valve 42 which controls the supply of air. In the low to mid-RPM, low load operating range, shown as X1 in Figure 12, air is sprayed from the air intake openings 40 to direct the fuel spray from the fuel injector 39 downward at angle α from its normal direction, as shown in Figures 2 through 6, thereby causing the spray to be directed toward the center of the air intake passage 16 at a spray distribution angle β.

On the other hand, in the high RPM, high load X2 operating range, as shown in Figures 7 through 11, virtually no air is sprayed from the air intake openings 40; to wit, either no air at all or just a slight amount of air is sprayed, so that the fuel spray from the fuel injector 39 is directed toward the sides of the air intake passage 16.

Thus, in the low to mid-RPM, low load X1 operating range, the fuel spray from the fuel injector 39 is directed toward the center of the air intake passage 16 which causes the air/fuel mixture to be primarily supplied through the center opening in the vicinity of the spark plug 14 where it may be easily ignited. Combustion in the low to mid-RPM, low load operating range X1 is stabilized thereby, and the effectiveness of the exhaust gas cleansing is improved.

Additionally, in the high RPM, high load X2 operating range, the direction of the fuel spray from the fuel injector 39 is toward the sides of the air intake passage 16, so that, compared with the flow into the combustion chamber 13 from the central opening 16a₂, the flow into the combustion chamber 13 from the side openings 16a₁, 16a₃ is stronger. thereby reducing turbulence in the mixture and improving the efficiency of mixing of the air/fuel mixture throughout the entire range of the combustion chamber, and enabling the reduction of fuel consumption and improvement of exhaust emissions cleansing.

In addition, by using an air spray from the air intake openings 40 in the low to mid-RPM, low load operating range X1 to direct the fuel injection spray toward the center of the air intake passage, and by using virtually no air spray, or none at all, from the air intake openings 40 in the high RPM, high load operating range to allow the fuel injection to be directed toward the sides of the air intake passage, a very simple structure utilizing air may be employed to change the direction of the fuel injection spray.

Further, by spraying air to direct the fuel injection spray toward the center of the air intake passage in the low to mid-RPM, low load operating range X1, it is possible to provide a richer air/fuel mixture in the vicinity of the spark plug, and to create a fuel mist with finer particle diameter to improve the fuel efficiency and to stabilize the combustion in the low to mid-RPM, low load operating range, without increasing the amount of fuel supplied, thereby reducing fuel consumption and improving the exhaust cleansing action.

On the other hand, by not utilizing an air spray in the high RPM, high load X2 operating range and not changing the direction of the fuel injection toward the sides of the air intake passage 16 by using such an air spray, a rich fuel mixture can be supplied to further improve the engine output in the high RPM, high load X2 operating range.

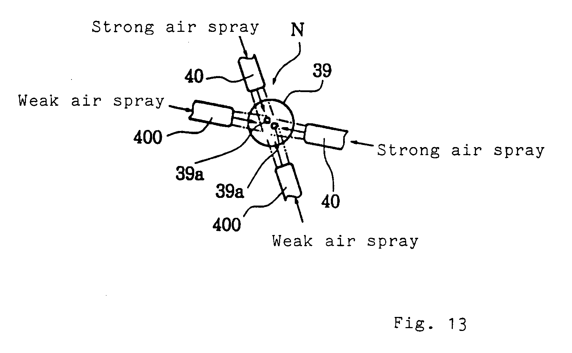

Figure 13 shows another embodiment for the fuel injection control means N. As in the previous embodiment, air intake openings that compose the fuel injection control means N are set at a prescribed angles on either side of the fuel injector 39. To change the direction of the fuel injection spray during low to mid-RPM, low load operating ranges X1, strong sprays of air from the air intake openings 40 are directed toward the fuel sprayed from injector nozzle 39a., but the air intake openings 400 are positioned opposite the air intake openings 40, and openings 400 spray air weakly toward the fuel spray from the fuel injection nozzle 39a.

As described above, the preferred embodiments change the direction of the fuel spray from the fuel injectors depending upon the operating state of the engine in order to effectively supply the center opening of the air intake passage into the combustion chamber with an air/fuel mixture in close proximity to the spark plug to facilitate ignition, thereby allowing more stable combustion without increasing the amount of fuel supplied during low RPM, low load conditions, allowing reduction in fuel consumption and improving the exhaust gas cleansing.

Further, in the high RPM, high load operating range, the clockwise tumble from the flow of air through the side air intake openings is strengthened compared with the counter clockwise tumble generated from flows through the center opening of the air intake passage into the combustion chamber, thereby improving the mixture efficiency of the air/fuel mixture throughout the entire range of the combustion chamber, and reducing fuel consumption and improving exhaust cleansing high RPM, high load operation ranges.

The engines described above employ an air spray from air intake openings to change the direction of the fuel spray from the fuel injector, thereby allowing both changing the injection spray direction using air and a very simple structure. The air spray additionally serves to make the fuel mist particles finer, thereby improving fuel efficiency and stabilizing combustion and improving exhaust gas cleansing during low to mid-RPM, low load operating ranges.

## Claims

1. Internal combustion engine comprising a cylinder unit (3,4) with a combustion chamber (13) defined therein, an intake passage arrangement (16) for supplying intake air into said combustion chamber (13), the intake passage arrangement (16) comprises a plurality of branch passages (16b₁,16b₂,16b₃) communicated with the combustion chamber (13), said branch passages (16b₁,16b₂,16b₃) branching from a common intake passage (16c), wherein a fuel injection unit (39) is provided for injecting fuel into said intake air and means including an air injection unit (40,41,42) having an air injection opening (40) located next to the fuel injection unit (39), the air injection unit (40,41,42) being provided for varying a direction and/or an area of fuel injection, **characterized in that** the intake passage arrangement (16) comprises three branch passages (16b₁,16b₂,16b₃) communicating with the combustion chamber (13) via a central opening (16a₂) and a pair of side openings (16a₁,16a₃), wherein under both low load and low engine speed operating conditions fuel is injected into the intake passage arrangement (16) towards the central opening (16a₂), and under both high load and high engine speed operating conditions the fuel is injected into the intake passage arrangement (16) towards the pair of side openings (16a₁,16a₃).

2. Internal combustion engine according to claim 1, **characterized in that** under both high load and low engine speed operating conditions or under both high engine speed and low load operating conditions the fuel is injected into the intake passage arrangement (16) towards the pair of side openings (16a₁,16a₃).

3. Internal combustion engine according to claim 1 or 2, **characterized in that** a control unit (12) is provided for controlling the air injection unit (40,41,42) in response to engine operating conditions.

4. Internal combustion engine according to one of the claims 1 to 3, **characterized in that** said air injection unit comprises an air passage (41) being connected with said air injection opening (40) and an air control valve (42) disposed in said air passage (41) for controlling the flow of air therethrough, wherein said control valve (42) being controlled by the control unit (12).

5. Internal combustion engine according to one of the claims 1 to 4, **characterized in that** five valves are provided per cylinder including three intake valves (18) associated with said three branch intake passages (16b₁,16b₂,16b₃) for opening and closing the communication between the intake passage arrangement (16) and the combustion chamber (13), and a pair of exhaust valves (17) for opening and closing the communication between said combustion chamber (13) and an exhaust passage arrangement (15).

6. Internal combustion engine according to one of the claims 1 to 5, **characterized in that** said fuel injection unit (39) comprises a pair of fuel injection nozzles (39a) for injecting fuel in a direction towards the side openings of the intake passage arrangement (16).

7. Internal combustion engine according to claim 6, **characterized in that** a pair of air injection openings (40) is provided disposed at two sides of said pair of injection nozzles (39a) for injecting air into the fuel jets injected by said fuel injection nozzles (39a) so as to deflect said fuel jets towards said central opening (16a₂).

8. Internal combustion engine according to one of the claims 1 to 7, **characterized in that** said air passage (41) at its upstream end is communicated with the intake passage arrangement (16) at a portion thereof upstream from a throttle valve (29) and downstream from an intake air flow meter (33).

9. Internal combustion engine according to one of the claims 1 to 8, **characterized in that** the air injection unit comprises four injection openings (40,400) arranged in pairs opposite to each other and laterally offset with respect to the fuel injection nozzle, the air injected through each air injection opening (40,400) of a pair being controlled to have different flow rates.

10. Method for forming a combustion charge of an internal combustion engine comprising the steps of:
supplying intake air into a combustion chamber (13) through an intake passage arrangement (16) comprising a plurality of branch passages (16b₁,16b₂,16b₃) communicated with the combustion chamber (13), said branch passages (16b₁,16b₂,16b₃) branching from a common intake passage (16c), injecting fuel into said intake air by means of a fuel injection unit (39), varying a direction and/or an area of fuel injection by means of an air injection unit (40,41,42) having an air injection opening (40)
**characterized by**
supplying intake air through the intake passage arrangement (16) comprising three branch passages (16b₁,16b₂,16b₃) communicating with the combustion chamber via a central opening (16a₂) and a pair of side openings (16a₁,16a₃), injecting fuel into the intake passage arrangement (16) towards the central opening (16a₂) under both low load and low engine speed operating conditions, and
injecting fuel into the intake passage arrangement (16) towards the pair of side openings (16a₁,16a₃) under both high load and high engine speed operating conditions.

11. Method for forming a combustion charge of an internal combustion engine according to claim 10, **characterized by** injecting fuel into the intake passage arrangement (16) towards the pair of side openings (16a₁,16a₃) under both high load and low engine speed operating conditionsor under both high engine speed and low load operating conditions.

## Patentansprüche

1. Verbrennungskraftmaschine mit interner Verbrennung mit einer Zylindereinheit (3,4) mit einer Verbrennungskammer (13), die in dieser definiert ist, einer Einlasspassagenanordnung (16) zum Zuführen von Einlassluft in diese Verbrennungskammer (13), wobei die Einlasspassagenanordnung (16) eine Mehrzahl von Verzweigungspassagen (16b₁, 16b₂, 16b₃) aufweist, die mit der Verbrennungskammer (13) kommunizieren, diese Verzweigungspassagen (16b₁, 16b₂, 16b₃) verzweigen sich von einer gemeinsamen Einlasspassage (16c), wobei eine Kraftstoffeinspritzeinheit (39) zum Einspritzen von Kraftstoff in diese Einlassluft vorgesehen ist und eine Einrichtung vorgesehen ist, die eine Lufteinspritzeinheit (40,41,42) beinhaltet, die eine Lufteinspritzöffnung (40) aufweist, die nahe der Kraftstoffeinspritzeinheit (39) angeordnet ist, die Lufteinspritzeinheit (40,41,42) ist vorgesehen, um die Richtung und/oder den Bereich der Kraftstoffeinspritzung zu verändern, **dadurch gekennzeichnet,** dass die Einlasspassagenanordnung (16) drei Verzweigungspassagen (16b₁, 16b₂, 16b₃) aufweist, die mit der Verbrennungskammer (13) über eine Zentralöffnung (16a₂) und einem Paar von Seitenöffnungen (16a₁, 16a₃) kommunizieren, wobei unter beiden, Niedrig-Last- und Niedrig-Drehzahl-Motorbetriebsbedingungen Kraftstoff in die Einlasspassagenanordnung (16) in Richtung der Zentralöffnung (16a₂) eingespritzt ist und unter beiden Hoch-Last- und Hoch-Drehzahl- Motorbetriebsbedingungen der Kraftstoff in die Einlasspassagenanordnung (16) in Richtung des Paars von Seitenöffnungen (16a₁,16a₃) eingespritzt ist.

2. Verbrennungskraftmaschine mit interner Verbrennung gemäß Anspruch 1, **dadurch gekennzeichnet,** dass unter beiden Hoch-Last- und Niedrig-Drehzahl-Motorbetriebsbedingungen oder unter beiden Hoch-Drehzahl- und Niedrig-Last-Betriebsbedingungen der Kraftstoff in die Einlasspassagenanordnung (16) in Richtung des Paars der Seitenöffnungen (16a₁,16a₃) eingespritzt ist.

3. Verbrennungskraftmaschine mit interner Verbrennung gemäß Anspruch 1 oder 2, **dadurch gekennzeichnet,** dass eine Steuereinheit (12) zum Steuern der Lufteinspritzeinheit (40,41,42) gemäß der Motorbetriebsbedingungen vorgesehen ist.

4. Verbrennungskraftmaschine mit interner Verbrennung gemäß einem der Ansprüche 1 bis 3, **dadurch gekennzeichnet,** dass diese Lufteinspritzeinheit eine Luftpassage (41) aufweist, die mit dieser Lufteinspritzöffnung (40) verbunden ist und ein Luftsteuerventil (42) aufweist, das in dieser Luftpassage (41) angeordnet ist zum Steuern des Luftstroms durch diese, wobei dieses Steuerventil (42) durch die Steuereinheit (12) gesteuert ist.

5. Verbrennungskraftmaschine mit interner Verbrennung gemäß einem der Ansprüche 1 bis 4, **dadurch gekennzeichnet,** dass fünf Ventile pro Zylinder vorgesehen sind, die drei Einlassventile (18) beinhalten, die diesen drei Verzweigungseinlasspassagen (16b₁, 16b₂, 16b₃) zugeordnet sind zum Öffnen und Schließen der Verbindung zwischen der Einlasspassagenanordnung (16) und der Verbrennungskammer (13), und ein Paar von Auslassventilen (17) beinhalten zum Öffnen und Schließen der Verbindung zwischen dieser Verbrennungskammer (13) und einer Auslasspassageanordnung (15).

6. Verbrennungskraftmaschine mit interner Verbrennung gemäß einem der Ansprüche 1 bis 5, **dadurch gekennzeichnet,** dass diese Kraftstoffeinspritzeinheit (39) ein Paar von Kraftstoffeinspritzdüsen (39a) aufweist zum Einspritzen von Kraftstoff in Richtung zu den Seitenöffnungen der Einlasspassagenanordnung (16).

7. Verbrennungskraftmaschine mit interner Verbrennung gemäß Anspruch 6, **dadurch gekennzeichnet,** dass ein Paar von Lufteinspritzöffnungen (40) vorgesehen sind, die an zwei Seiten dieses Paars von Einspritzdüsen (39a) angeordnet sind, zum Einspritzen von Luft in die Kraftstoffstrahlen, die durch die Kraftstoffeinspritzdüsen (39a) eingespritzt werden, so dass diese Kraftstoffstrahlen in Richtung zu der Zentralöffnung (16a₂) abgelenkt werden.

8. Verbrennungskraftmaschine mit interner Verbrennung gemäß einem der Ansprüche 1 bis 7, **dadurch gekennzeichnet,** dass diese Luftpassage (41) an ihrem stromauf liegenden Ende mit der Einlasspassagenanordnung (16) an einem Abschnitt derselben stromauf von einem Drosselventil (29) und stromab von einer Einlassluftstrommesseinrichtung (33) kommuniziert.

9. Verbrennungskraftmaschine mit interner Verbrennung gemäß einem der Ansprüche 1 bis 8, **dadurch gekennzeichnet,** dass die Lufteinspritzeinheit vier Einspritzöffnungen (40,400) aufweist, die paarweise gegenüberliegend zueinander und lateral versetzt mit Bezug auf die Kraftstoffeinspritzdüse angeordnet sind, wobei die Luft, die durch jede Lufteinspritzöffnung (40,400) eines Paares eingespritzt wird, derart gesteuert wird, dass diese unterschiedliche Stromraten aufweist.

10. Verfahren zum Bilden einer Verbrennungsladung für eine Verbrennungskraftmaschine mit interner Verbrennung mit den Schritten:
Zuführen von Einlassluft in eine Verbrennungskammer (13) durch eine Einlasspassagenanordnung (16), die eine Mehrzahl von Verzweigungspassagen (16b₁, 16b₂, 16b₃) aufweist, die mit der Verbrennungskammer (13) kommunizieren, wobei diese Verzweigungspassagen (16b₁, 16b₂, 16b₃) von einer gemeinsamen Einlasspassage (16c) abzweigen,
Einspritzen von Kraftstoff in diese Einlassluft durch eine Kraftstoffeinspritzeinheit (39),
Verändern der Richtung und/oder des Bereichs des Kraftstoffs, der eingespritzt wird, durch eine Lufteinspritzeinheit (40,41,42), die eine Lufteinspritzöffnung (40) aufweist,
**gekennzeichnet durch**
Zuführen von Einlassluft durch die Einlasspassagenanordnung (16), die drei Verzweigungspassagen (16b₁, 16b₂, 16b₃) aufweist, die mit der Verbrennungskammer über eine zentrale Öffnung (16a₂) und einem Paar von Seitenöffnungen (16a₁, 16a₃) kommunizieren
Einspritzen von Kraftstoff in die Einlasspassagenanordnung (16) in Richtung der Zentralöffnung (16a₂) unter beiden Niedrig-Last- und Niedrig-Drehzahl-Motorbetriebsbedingungen, und
Einspritzen von Kraftstoff in die Einlasspassagenanordnung (16) in Richtung des Paares der Seitenöffnungen (16a₁, 16a₃) unter beiden Hoch-Last- und Hoch-Drehzahl-Motorbetriebsbedingungen.

11. Verfahren zum Bilden einer Verbrennungsladung für eine Verbrennungskraftmaschine mit interner Verbrennung gemäß Anspruch 10, **gekennzeichnet durch** Einspritzen von Kraftstoff in die Einlasspassagenanordnung (16) in Richtung des Paares der Seitenöffnungen (16a₁, 16a₃) unter beiden Hoch-Last und Niedrig-Drehzahl- und beiden Hoch-Drehzahl- und Niedrig-Last-Betriebsbedingungen.

## Revendications

1. Moteur à combustion interne comprenant une unité de cylindre (3, 4), une chambre de combustion (13) étant définie dans celui-ci, un aménagement de passage d'admission (16) destiné à fournir de l'air d'admission à l'intérieur de ladite chambré de combustion (13), l'aménagement de passage d'admission (16) se compose d'une pluralité de passages en dérivation (16b₁, 16b₂, 16b₃) en communication avec ladite chambre de combustion (13), lesdits passages en dérivation (16b₁, 16b₂, 16b₃) étant en dérivation à partir d'un passage d'admission commun (16c), dans lequel une unité d'injection de carburant (39) est fournie afin d'injecter du carburant dans ledit air d'admission et des moyens comprenant une unité d'injection d'air (40, 41, 42) comportant une ouverture d'injection d'air (40) située à proximité de l'unité d'injection de carburant (39), l'unité d'injection d'air (40, 41, 42) étant fournie afin de modifier une direction et / ou une zone d'injection de carburant, caractérisé en ce que l'aménagement de passage d'admission (16) se compose de trois passages en dérivation (16b₁, 16b₂, 16b₃) en communication avec la chambre de combustion (13) par l'intermédiaire d'une ouverture centrale (16a₂) et d'une paire d'ouvertures latérales (16a₁, 16a₃), dans lequel, dans des conditions de fonctionnement du moteur à faible charge et à basse vitesse, du carburant est injecté à l'intérieur de l'aménagement de passage d'admission (16) vers l'ouverture centrale (16a₂), et dans des conditions de fonctionnement du moteur à charge élevée et à vitesse élevée, le carburant est injecté à l'intérieur de l'aménagement de passage d'admission (16) vers la paire d'ouvertures latérales (16a₁, 16a₃).

2. Moteur à combustion interne selon la revendication 1, caractérisé en ce que, dans des conditions de fonctionnement du moteur à charge élevée et à basse vitesse, ou dans des conditions de fonctionnement du moteur à faible charge et à vitesse élevée, le carburant est injecté à l'intérieur de l'aménagement de passage d'admission (16) vers la paire d'ouvertures latérales (16a₁, 16a₃).

3. Moteur à combustion interne selon les revendications 1 ou 2, caractérisé en ce qu'une unité de commande (12) est fournie afin de commander l'unité d'injection d'air (40, 41, 42) en réponse aux conditions de fonctionnement du moteur.

4. Moteur à combustion interne selon les revendications 1 à 3, caractérisé en ce que ladite unité d'injection d'air se compose d'un passage d'air (41) connecté à ladite ouverture d'injection d'air (40) et d'un clapet de commande d'air (42) disposé dans ledit passage d'air (41) afin de commander le débit d'air au travers de celui-ci, dans lequel ledit clapet de commande (42) est commandé par l'unité de commande (12).

5. Moteur à combustion interne selon l'une des revendications 1 à 4, caractérisé en ce que cinq soupapes sont aménagées sur chaque cylindre, à savoir trois soupapes d'admission (18) associées avec lesdits trois passages d'admission en dérivation (16b₁, 16b₂, 16b₃) destinées à ouvrir et à fermer la communication entre l'aménagement de passage d'admission (16) et la chambre de combustion (13), et une paire de soupapes d'échappement (17) destinées à ouvrir et à fermer la communication entre ladite chambre de combustion (13) et un aménagement de passage d'échappement (15).

6. Moteur à combustion interne selon l'une des revendications 1 à 5, caractérisé en ce que ladite unité d'injection de carburant (39) comprend une paire d'injecteurs de carburant (39a) destinés à injecter du carburant dans la direction des ouvertures latérales de l'aménagement de passage d'admission (16).

7. Moteur à combustion interne selon la revendication 6, caractérisé en ce qu'une paire d'ouvertures d'injection d'air (40) est aménagée sur les deux côtés de ladite paire d'injecteurs (39a) afin d'injecter de l'air dans les jets de carburant injectés par lesdits injecteurs de carburant (39a) de manière à dévier lesdits jets de carburant vers ladite ouverture centrale (16a₂).

8. Moteur à combustion interne selon l'une des revendications 1 à 7, caractérisé en ce que ledit passage d'air (41) est en communication à son extrémité amont avec l'aménagement de passage d'admission (16) sur une partie de celui-ci située en amont d'un papillon des gaz (29) et en aval d'un indicateur de débit d'air d'admission (33).

9. Moteur à combustion interne selon l'une des revendications 1 à 8, caractérisé en ce que l'unité d'injection d'air se compose de quatre ouvertures d'injection (40, 400) aménagées par paires en opposition l'une par rapport à l'autre et décalées latéralement par rapport à l'injecteur de carburant, l'air injecté au travers de chaque ouverture d'injection d'air (40, 400) d'une paire étant commandé afin d'obtenir des débits différents.

10. Procédé pour former une charge de combustion d'un moteur à combustion interne comprenant les étapes de :
fourniture d'air d'admission à l'intérieur d'une chambre de combustion (13) au travers d'un aménagement de passage d'admission (16) se composant d'une pluralité de passages en dérivation (16b₁, 16b₂, 16b₃) en communication avec la chambre de combustion (13), lesdits passages en dérivation (16b₁, 16b₂, 16b₃) étant en dérivation à partir d'un passage d'admission commun (16c),
injection de carburant dans ledit air d'admission au moyen d'une unité d'injection de carburant (39),
modification d'une direction et / ou d'une zone d'injection de carburant au moyen d'une unité d'injection d'air (40, 41, 42) comportant une ouverture d'injection d'air (40), caractérisé par,
la fourniture d'air d'admission au travers de l'aménagement de passage d'admission (16) se composant de trois passages en dérivation (16b₁, 16b₂, 16b₃) en communication avec la chambre de combustion (13) par l'intermédiaire d'une ouverture centrale (16a₂) et d'une paire d'ouvertures latérales (16a₁, 16a₃),
l'injection de carburant à l'intérieur de l'aménagement de passage d'admission (16) vers l'ouverture centrale (16a₂) dans des conditions de fonctionnement du moteur à faible charge et à basse vitesse, et
l'injection de carburant à l'intérieur de l'aménagement de passage d'admission (16) vers la paire d'ouvertures latérales (16a₁, 16a₃) dans des conditions de fonctionnement du moteur à charge élevée et à vitesse élevée.

11. Procédé pour former une charge de combustion d'un moteur à combustion interne selon la revendication 10, caractérisé par l'injection de carburant à l'intérieur de l'aménagement de passage d'admission (16) vers la paire d'ouvertures latérales (16a₁, 16a₃) dans des conditions de fonctionnement du moteur à charge élevée et à basse vitesse ou dans des conditions de fonctionnement du moteur à vitesse élevée et à faible charge.
